# EUROPEAN PATENT SPECIFICATION

(11) **EP 3 258 030 B1**
(45) Date of publication and mention of the grant of the patent: **02.09.2020**
(21) Application number: 17176427.7
(22) Date of filing: 16.06.2017
(51) Int. Cl.: E04D 5/10, E04D 5/12, B32B 37/24, D06N 5/00, D06N 3/04, B32B 7/12, B32B 11/04, B32B 11/10, B32B 27/06, B32B 27/36, C04B 20/10

(54) **COOL ROOF SYSTEMS AND METHODS**
KÜHLDACHSYSTEME UND -VERFAHREN
SYSTÈMES ET PROCÉDÉS DE REFROIDISSEMENT DE TOIT

(30) Priority: 16.06.2016 US 201615184513
(43) Date of publication of application: 20.12.2017
(73) Proprietor: Johns Manville, Denver, CO 80202 (US)
(72) Inventor: WANG, Lance, Parker, CO Colorado 80134 (US); HAZY, Joel, Brighton, CO Colorado 80601 (US); SHEN, ChangQing, Centennial, CO Colorado 80122 (US)
(74) Representative: Dörr, Klaus

(56) References cited:
- WO-A1-2016/001303
- WO-A2-2008/147972
- JP-A- 2005 155 216
- US-A1- 2007 054 129
- US-A1- 2011 081 537

## Description

### FIELD OF THE INVENTION

The disclosure generally relates to roofing systems.

### BACKGROUND OF THE INVENTION

This section is intended to introduce the reader to various aspects of art that may be related to various aspects of the present invention, which are described and/or claimed below. This discussion is believed to be helpful in providing the reader with background information to facilitate a better understanding of the various aspects of the present invention. Accordingly, it should be understood that these statements are to be read in this light, and not as admissions of prior art.

Commercial and industrial buildings typically have roofing systems with a metal deck, lightweight concrete, structural concrete, or wood deck (e.g., low-slope roof deck). These roofing systems usually have one or more layers of insulation on top of the roof deck and one or more waterproof layers that protect the insulation from moisture. However, without protection from the sun's ultraviolet light the waterproof layers may decompose or breakdown. For example, the ultraviolet light may break polymer chains in the water proofing material. As the polymer chains break the water proofing material becomes brittle and susceptible to cracking and/or breaking. To protect the waterproof layers, some roofing systems such as the one disclosed in US 2011/081537 place granules on top of the waterproof layers. The granules protect the underlying waterproof layers by absorbing and/or reflecting ultraviolet light. However, granules are typically colored (e.g., have a low reflectivity) and therefore absorb significant amounts of energy during the day, which may increase cooling costs.

### SUMMARY OF THE INVENTION

The present disclosure is directed to a membrane roofing system. The membrane roofing system includes a waterproof layer that protects an insulation layer and a granule having a 65% or greater reflectivity coupled to the waterproof layer. The granule protects the waterproof layer by reducing transmission of ultraviolet light to the waterproof layer. The granule is coated in a cationic fluorinated (meth)acrylic copolymer that resists adsorption and absorption of asphaltic chemicals by the granule from the waterproof layer.

An aspect of the disclosure includes a built-up roofing system. The built-up roofing system includes a first waterproof layer that protects an insulation layer. A first fiberglass, polyester or combination fiberglass/polyester reinforced layer coupled to the first waterproof layer, and a granule having a 65% or greater reflectivity coupled to the first waterproof layer. The granule protects the first waterproof layer by reducing transmission of ultraviolet light to the first waterproof layer. The granule is coated in a cationic fluorinated (meth) acrylic copolymer that resists adsorption and absorption of asphaltic chemicals by the granule from the waterproof layer.

Another aspect of the disclosure includes a method of manufacturing a roofing system. The method begins by coating a granule. The coating includes a cationic fluorinated (meth) acrylic copolymer that resists adsorption and absorption of asphaltic chemicals by the granule from a waterproof layer. After coating the granule, the granule is dried and coupled to the waterproof layer.

### BRIEF DESCRIPTION OF THE DRAWINGS

Various features, aspects, and advantages of the present invention will be better understood when the following detailed description is read with reference to the accompanying figures in which like characters represent like parts throughout the figures, wherein:
FIG. 1 is a cross-sectional view of an embodiment of a membrane roofing system with granules;
FIG. 2 is a cross-sectional view of an embodiment of a built-up roofing (BUR) system with granules;
FIG. 3 is a side view of an embodiment of a granule coated with a cationic fluorinated (meth) acrylic copolymer;
FIG. 4 is a cross-sectional detail view of an embodiment of a pore in a granule coated with a cationic fluorinated (meth) acrylic copolymer;
FIG. 5 is a process for preparing and attaching granules to a waterproof layer; and
FIG. 6 is a process for preparing and attaching granules to a waterproof layer.

### DETAILED DESCRIPTION

One or more specific embodiments of the present invention will be described below. These embodiments are only exemplary of the present invention. Additionally, in an effort to provide a concise description of these exemplary embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The embodiments discussed below include a roofing system with granules coated with cationic fluorinated (meth) acrylic copolymer. The cationic fluorinated (meth) acrylic copolymer enables the granules to resist and/or block absorption/adsorption of asphaltic chemicals that may leach out of the waterproof layer. Absorption and/or adsorption of asphaltic chemicals may change the color of the granules and thus their reflectivity. By resisting absorption/adsorption of color changing substances from the waterproof layer, the cationic fluorinated (meth) acrylic copolymer enables highly reflective granules to maintain their reflectivity. The greater the granule's reflectivity the less energy absorbed by the roof, which reduces power consumption by building climate control systems.

The reflectivity of 65% or greater (e.g., 65%, 70%, 80%, 90%, 95% or greater) means the solar reflectivity measured using ASTM C1549 (ASTM C1549-16, Standard Test Method for Determination of Solar Reflectance Near Ambient Temperature Using a Portable Solar Reflectometer, ASTM International, West Conshohocken, PA, 2016, www.astm.org).

Ultraviolet light within the meaning of the invention means radiation having a wavelength range of about 100 nm to 400 nm.

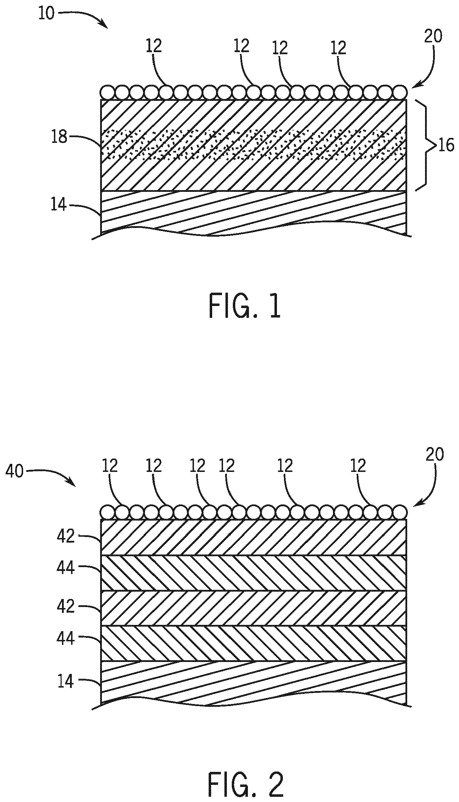

FIG. 1 is a cross-sectional view of an embodiment of a membrane roofing system 10 with granules 12. The membrane roofing system 10 includes one or more insulation layers 14 that resist heat transfer through the roof of a building. To protect the insulation layer(s) 14 from the environment (e.g., rain, snow), the membrane roofing system 10 includes one or more waterproof layers or membranes 16. In some embodiments, the waterproof layer 16 may be reinforced with a matrix 18 (e.g., fiberglass, polyester, or fiberglass/polyester combination reinforcement) that increases the tensile strength and tear resistance of the waterproof layer 16.

The waterproof layers 16 may be an asphalt-based material (e.g., Styrene-Butadiene-Styrene (SBS) Modified Asphalt, Atactic Polypropylene (APP) Modified Asphalt, or Oxidized Asphalt Coating). Asphaltic chemicals are highly complex chemicals containing saturated and unsaturated aliphatic and aromatic compounds with up to 150 carbon atoms. Their composition varies depending on the source of crude oil. Many of the compounds contain oxygen, nitrogen, sulfur, and other heteroatoms. Asphalt typically contains about 80% by weight of carbon; around 10% by weight of hydrogen; up to 6% by weight of sulfur; small amounts of oxygen and nitrogen; and trace amounts of metals such as iron, nickel, and vanadium. The molecular weights of the constituent compounds range from several hundred to many thousands. Thus, modified asphalt is also called modified bitumen.

As explained above, ultraviolet light can break down the waterproof layer 16 by breaking polymer chains. As polymer chains break, the waterproof material may become brittle and susceptible to cracking and/or breaking. To protect the waterproof layer 16, the membrane roofing system 10 includes a layer 20 of granules 12 that block and/or reduce the amount of ultraviolet light that reaches the waterproof layer 16. The granules 12 may be made out of stone, aluminum silicate, Barium Sulfate, sintered glass, ceramic, etc. and have a small particle size (e.g., 0.2 mm to 2.4 mm). The granules 12 have a greater surface area than regular masonry slab material, such as granite or limestone tile, which makes stain resistance a challenge, especially when the granules 12 are partially embedded in asphaltic material (e.g., asphaltic chemicals).

In addition to protecting the waterproof layer 16, the granules 12 reduce energy absorption by the membrane roofing system 10. For example, the granules 12 have a reflectivity of 65% or greater (e.g., 65%, 70%, 80%, 90%, 95% or greater). By reflecting light away from the membrane roofing system 10 the granules 12 decrease power consumption by climate control systems that cool the building. In addition, the highly reflective cool roof may also reduce the urban heat island effect. Because the granules 12 are embedded or otherwise in contact with the waterproof layer 16, the granules 12 may absorb and/or adsorb asphaltic chemicals from the waterproof layer 16. For example, high temperatures may cause asphaltic chemicals to leach out of the waterproof layer 16. If these substances are absorbed and/or adsorbed by the granules 12 they may change the color of the granules 12. A change in granule 12 color changes the reflectivity of the granule 12, which increases the energy absorbed by the membrane roofing system 10. To maintain the reflectivity of the granules 12, the granules 12 are coated with a cationic fluorinated (meth) acrylic copolymer (e.g., DuPont ® ST-100, DuPont ® ST-110, or a combination thereof). The cationic fluorinated (meth) acrylic copolymer coating may be about 0.001% to about 3.0% by weight of an uncoated granule 12. The cationic fluorinated (meth) acrylic copolymer blocks and/or reduces adsorption and/or absorption by the granule 12 of asphaltic chemicals in the waterproof layer 16. Accordingly, the granules 12 are able to protect the waterproof layer 16 as well as maintain their reflectivity.

The cationic fluorinated (meth)acrylic copolymer can be either acrylate or methylate copolymer that includes at least fluorinated alkyl containing acrylate/methacrylate monomer, such as 1H, 1H, 2H, 2H-perfluorooctyl acrylate/methacrylate, and amine containing acrylate or methacrylate monomer, such as 2-(dimethylamino) ethyl methacrylate. The amine functionality, in particular tertiary and quaternary, may provide cationic sites along the polymer chain, which enables the polymer to be dispersed in aqueous solution. In addition, the cationic characteristic of the polymer enables it to wet and adsorb to a cementatious substrate, such as an aluminum silicate based granule 12. The fluorinated alkyl chain of the cationic fluorinated (meth) acrylic copolymer may provide both hydrophobic and lipophobic protection to the granule 12. In some embodiments, the polymer may include a silane containing monomer, such as methacryloxypropyltrimethoxysilane, which may form a covalent bond with the granule 12 increasing adhesion and durability of the coating. In contrast, anionic copolymers made with the same fluorinated alkyl acrylate/methylate co-monomer wet and coat the surface of the granule 12 poorly and do not provide the same hydrophobic and lipophobic protection.

FIG. 2 is a cross-sectional view of an embodiment of a built-up roof (BUR) system 40 with granules 12. The BUR system 40 includes one or more insulation layers 14 that resist heat transfer through the roof of a building. To protect the insulation layer(s) 14 from the environment (e.g., rain, snow), the BUR system 40 includes one or more waterproof layers or membranes 42. The waterproof layers 42 may be a polymer material such as an asphalt-based material (e.g., Styrene-Butadiene-Styrene (SBS) Modified Asphalt, Atactic Polypropylene (APP) Modified Asphalt, or Oxidized Asphalt Coating) The BUR system 40 structurally reinforces the waterproof layers 42 with fiberglass, polyester, or fiberglass/polyester combination reinforcement layers 44 (e.g., fiberglass, polyester, or fiberglass/polyester combination reinforcement) that increase the tensile strength and tear resistance of the waterproof layers 42. As illustrated, the fiberglass layers 44 are placed between the waterproof layers 42 in an alternating manner to strengthen the overall BUR system 40.

As explained above, ultraviolet light may negatively affect the waterproof layer material. To protect the waterproof layers 42, the membrane roofing system 10 includes a layer 20 of granules 12 that block and/or reduce the amount of ultraviolet light that reaches the exterior or outermost waterproof layer 42. The granules 12 may be made out of stone, aluminum silicate, Barium Sulfate, sintered glass, ceramic, etc. In addition to protecting the waterproof layers 42, the granules 12 reduce energy absorption by the BUR system 40. For example, the granules 12 have a reflectivity of 65% or greater (e.g., 65%, 70%, 80%, 90%, 95% or greater). By reflecting light away from the BUR system 40, the granules 12 decrease the amount of energy needed to cool the building. In other words, the granules 12 reduce power consumption by climate control units (e.g., air conditioning units).

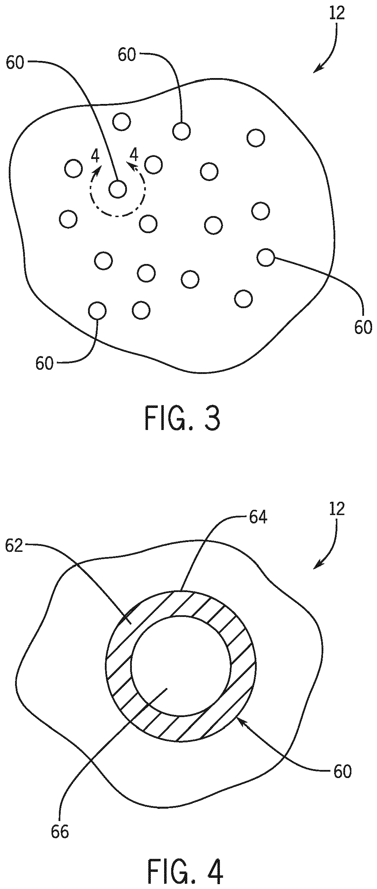

Because the granules 12 are embedded or otherwise in contact with the waterproof layers 42 the granules 12 may absorb and/or adsorb color-changing chemicals, oils, etc. from the waterproof layers 42. For example, the high temperatures may cause asphaltic chemicals to leach out of the waterproof layers 42. If these substances are absorbed and/or adsorbed by the granules 12 they can change the color of the granules 12. A change in the granule 12 color changes the granule's reflectivity. To maintain the reflectivity of the granules 12, the granules 12 are coated with a cationic fluorinated (meth)acrylic copolymer (e.g., DuPont ® ST-100, DuPont ® ST-110, or a combination thereof). The cationic fluorinated (meth)acrylic copolymer blocks and/or reduces adsorption and/or absorption by the granule 12 of the chemicals, oils, etc. in the waterproof layers 42. Accordingly, the granules 12 are able to protect the waterproof layers 42 as well as maintain their reflectivity. FIG. 3 is a side view of an embodiment of a granule 12 coated with a cationic fluorinated (meth)acrylic copolymer. The cationic fluorinated (meth)acrylic copolymer blocks and/or reduces absorption/adsorption of asphaltic chemicals in the waterproof layers 16, 42. In some embodiments, the granules 12 may be made out of a porous material. By coating the granules 12 with the cationic fluorinated (meth)acrylic copolymer, the granules 12 resist absorbing asphaltic chemicals through the pores 60 and/or adsorbing the asphaltic chemicals In other words, the cationic fluorinated (meth)acrylic copolymer coating enables the granules 12 to maintain their reflectance by resisting absorption/adsorption of asphaltic chemicals that leach out of the waterproof layers 16, 42. The cationic fluorinated (meth)acrylic copolymer coating may be about 0.001% to about 3.0% by weight of an uncoated granule 12.

Table 1 below illustrates the absorption/adsorption resistance of the granules 12 coated with cationic fluorinated (meth)acrylic copolymer versus granules coated with silicone. In the example below, the reflectance of the granule 12 remains unchanged when the cationic fluorinated (meth)acrylic copolymer coating amount is greater than 0.50% by weight of an uncoated granule 12, while a granule 12 with a fluorinated acrylic copolymer coating of 0.25% by weight changes only slightly. In contrast, the reflectance of a silicone coated granule changes significantly in the same testing procedures. The ability of the coating to provide stain resistance at low coating weight may be due to monolayer formation on the granule surface. As explained above, a reduction in reflectance increases energy absorption by the roof and thus energy consumption by climate control units.

**Table 1**

| Coating Amount (coating amount is shown in percent by weight of an uncoated granule) | Granule Reflectance with Cationic fluorinated (meth)acrylic copolymer Coating (28 Days of Dark Oven Exposure at 80°C) | Change in Cationic fluorinated (meth)acrylic copolymer Coated Granule Reflectance (original reflectance 73.9%) | Granule Reflectance with Silicone Coating (28 Days of Dark Oven Exposure at 80°C) | Change in Silicone Coated Granule Reflectance (original reflectance 73.9%) |
|---|---|---|---|---|
| 0.25% | 72.4% | -1.5% | 53.1% | -19.3% |
| 0.50% | 73.9% | 0% | 60.1% | -14.2% |
| 0.75% | 73.9% | 0% | 57.7% | -16.1% |
| 1.0% | 73.9% | 0% | 58.7% | -14.9% |
| 2.0% | 73.9% | 0% | 62.9% | -11.0% |

FIG. 4 is a cross-sectional detail view of an embodiment of a pore 60 in a granule 12 coated with a cationic fluorinated (meth)acrylic copolymer. As illustrated, the cationic fluorinated (meth)acrylic copolymer does not fill the pore 60; but instead, coats the interior surface 64 of the pore 60. In some instance, the fluorinated (meth)acrylic copolymer can form a monolayer on the substrate that protects at very low concentrations. This unique characteristic of fluorinated (meth)acrylic copolymer provides granule protection over a wide range of applied concentrations. Even though the interior surface 64 is covered, the lipophobicity of the cationic fluorinated (meth)acrylic copolymer blocks or reduces absorption of oils into the granule 12 through the aperture 66. In some embodiments, the cationic fluorinated (meth)acrylic copolymer may completely fill the pore 60 blocking oil absorption by the granule 12.

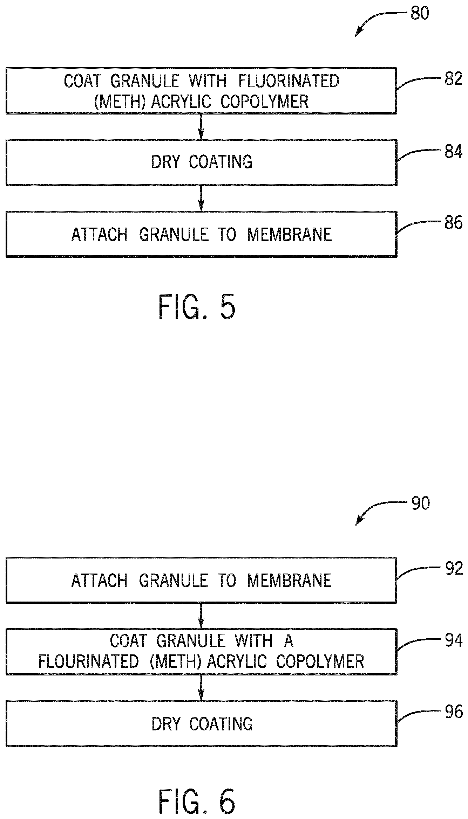

FIG. 5 illustrates a process 80 for preparing and attaching the granules 12 to the waterproof layers 16, 42. The process 80 begins by coating the granules 12 in cationic fluorinated (meth) acrylic copolymer dispersion, block 82. In some embodiments, the cationic fluorinated (meth)acrylic copolymer dispersion may be applied to the granules 12 via direct spray (e.g., quick spray) using a dispersion solution containing between about 10% to about 80% fluorinated acrylic copolymer. The concentration of the fluorinated acrylic copolymer in the solution may be determined by the liquid pickup of the granule 12, so that the desired amount of cationic fluorinated (meth)acrylic copolymer coats the granule 12 (e.g., coating amount between about 0.001% to about 0.5% by weight of an uncoated granule 12). In another embodiment, the cationic fluorinated (meth)acrylic copolymer coating may be applied via dip coating.

The granules 12 are then dried, block 84. In some embodiments, the granules 12 may be air-dried. In another embodiment, the granules 12 may be dried in an oven (e.g., dried in an oven at about 100°C). In still other embodiments, the granules 12 may be dried using a combination of air-drying and an oven. In some embodiments, the granules 12 may be recoated with cationic fluorinated (meth)acrylic copolymer and then dried again. This may be repeated multiple times (e.g., 1, 2, 3, 4, 5, or more times) to ensure adequate coating of the granules 12. Once the granules 12 are dried, the granules 12 are attached to a waterproof layer 16, 42, block 86. For example, the waterproof layer 16, 42 may be in a molten state when the granules 12 are placed on the waterproof layer 16, 42, block 86. As the waterproof layer 16, 42 cools and hardens the granules 12 couple to the waterproof layer 16, 42. In some embodiments, the granules 12 may couple to the waterproof layer 16, 42 with an adhesive.

FIG. 6 illustrates a process 90 for preparing and attaching the granules 12 to the waterproof layer 16, 42. However, instead of coating the granules 12 and then attaching the granules 12 to the waterproof layer 16, 42, the granules 12 are first attached to the waterproof layer 16, 42, block 92. In some embodiments, the waterproof layer 16, 42 is in a molten state when the granules 12 are placed on the waterproof layer 16, 42. As the waterproof layer 16, 42 cools and hardens the granules 12 couple to the waterproof layer 16, 42. In some embodiments, the granules 12 may couple to the waterproof layer 16, 42 with an adhesive.

Once the granules 12 are coupled to the waterproof layer 16, 42, the granules 12 are coated with a cationic fluorinated (meth)acrylic copolymer, block 94. For example, the granules 12 may be coated via direct spray with a dispersion solution containing between about 10% to about 80% cationic fluorinated (meth)acrylic copolymer. The concentration of the cationic fluorinated (meth)acrylic copolymer in the solution may be determined by the liquid pickup of the granule 12, so that the desired amount of fluorinated acrylic copolymer coats the granule 12 (e.g., coating amount between about 0.001% to about 0.5% by weight of an uncoated granule 12). In another embodiment, the fluorinated acrylic copolymer coating may be applied via dip coating. For example, the granules 12 and waterproof layer 16, 42 may be dipped together in a cationic fluorinated (meth) acrylic copolymer dispersion. In some embodiments, only a portion of the granules 12 may be dipped in a cationic fluorinated (meth)acrylic copolymer dispersion. The liquid pickup of the granules 12 may then facilitate coating and absorption of the cationic fluorinated (meth)acrylic copolymer.

After coating the granules 12, the granules 12 are dried, block 96. In some embodiments, the granules 12 may be air-dried. In another embodiment, the granules 12 may be dried in an oven (e.g., dried in oven at temperatures around 100°C). In still other embodiments, the granules 12 may be dried using a combination of air-drying and an oven.

While the invention may be susceptible to various modifications and alternative forms, specific embodiments have been shown by way of example in the drawings and have been described in detail herein. However, it should be understood that the invention is not intended to be limited to the particular forms disclosed. Rather, the invention is to cover all modifications, equivalents, and alternatives falling within the scope of the invention as defined by the following appended claims.

## Claims

1. A membrane roofing system (10), comprising:
a waterproof layer (16) configured to protect an insulation layer (14); and
an aluminum silicate granule (12) having a particle size between 0.2 mm - 2.4 mm coupled to the waterproof layer,
wherein the aluminum silicate granule has a 65% or greater reflectivity and is configured to reduce transmission of ultraviolet light to the waterproof layer, **characterized in that**
the aluminum silicate granule is coated in a cationic fluorinated (meth)acrylic copolymer that resists adsorption and absorption of asphaltic chemicals by the aluminum silicate granule from the waterproof layer.

2. The system as claimed in claim 1, comprising the insulation layer and wherein the waterproof layer couples to the insulation layer.

3. The system as claimed in claim 1 or 2, wherein the waterproof layer is an asphalt-based membrane.

4. The system as claimed in one or more of claims 1 to 3, wherein the waterproof layer comprises a fiberglass, polyester or fiberglass/polyester matrix configured to reinforce the waterproof layer.

5. A built-up roofing system (40), comprising:
a first waterproof layer (42) configured to protect an insulation layer (14);
a first fiberglass layer (44) configured to support the first waterproof layer; and
an aluminum silicate granule (12) having a particle size between 0.2 mm - 2.4 mm coupled to the first waterproof layer, wherein the aluminum silicate granule has a 65% or greater reflectivity and is configured to reduce transmission of ultraviolet light to the first waterproof layer, and wherein the aluminum silicate granule is coated in a cationic fluorinated (meth)acrylic copolymer that resists adsorption and absorption of asphaltic chemicals by the aluminum silicate granule.

6. The system as claimed in claim 5, comprising a second waterproof layer.

7. The system as claimed in claim 5 or 6, comprising a second fiberglass, polyester, or fiberglass/polyester reinforced layer.

8. The system as claimed in one or more of claims 5 to 7, comprising the insulation layer.

9. The system as claimed in one or more of claims 5 to 8, wherein the first waterproof layer is an asphalt-based membrane.

10. The system as claimed in one or more of claims 1 to 4 or as claimed in one or more of claims 5 to 9, wherein the aluminum silicate granule is porous.

11. The system as claimed in one or more of claims 1 to 4 or as claimed in one or more of claims 5 to 10, wherein the reflectivity of the aluminum silicate granule is greater than 70%, preferably greater than 80%.

12. The system as claimed in one or more of claims 1 to 4 or as claimed in one or more of claims 5 to 11, wherein the fluorinated acrylic copolymer coating is at least 0.001% by weight of an uncoated aluminum silicate granule.

13. A method of manufacturing a roofing system according to claim 1, comprising:
coating an aluminum silicate granule having a particle size between 0.2 mm - 2.4 mm
and a reflectivity of 65% or greater, wherein the coating comprises a cationic fluorinated (meth) acrylic copolymer that resists adsorption and absorption of asphaltic chemicals by the aluminum silicate granule from a waterproof layer; drying the coating on the aluminum silicate granule; and
coupling the aluminum silicate granule to the waterproof layer.

14. The method as claimed in claim 13, wherein the waterproof layer is an asphalt-based membrane.

15. The method as claimed in claim 13 or 14, wherein the coating is at least 0.001% by weight of an uncoated aluminum silicate granule of the fluorinated acrylic copolymer.

## Patentansprüche

1. Membranbedachungssystem (10), umfassend:
eine wasserdichte Schicht (16), die zum Schutz einer Isolierschicht (14) konfiguriert ist; und
ein Aluminiumsilikatgranulat (12) mit einer Partikelgröße zwischen 0,2 mm und 2,4 mm, verbunden mit der wasserdichten Schicht,
wobei das Aluminiumsilikatgranulat ein Reflexionsvermögen von 65 % oder größer aufweist und konfiguriert ist, um die Durchlässigkeit von ultraviolettem Licht zu der wasserdichten Schicht zu verringern,
**dadurch gekennzeichnet, dass** das Aluminiumsilikatgranulat mit einem kationischen fluorierten (Meth)acrylcopolymer beschichtet ist, das der Adsorption und Absorption von Asphaltchemikalien durch das Aluminiumsilikatgranulat aus der wasserdichten Schicht widersteht.

2. System nach Anspruch 1, umfassend die Isolierschicht, und wobei die wasserdichte Schicht mit der Isolierschicht verbunden ist.

3. System nach Anspruch 1 oder 2, wobei die wasserdichte Schicht eine Membran auf Asphaltbasis ist.

4. System nach einem oder mehreren der Ansprüche 1 bis 3, wobei die wasserdichte Schicht eine Glasfaser-, Polyester- oder Glasfaser/Polyester-Matrix umfasst, die konfiguriert ist, um die wasserdichte Schicht zu verstärken.

5. Aufgebautes Bedachungssystem (40), umfassend:
eine erste wasserdichte Schicht (42), die zum Schutz einer Isolierschicht (14) konfiguriert ist;
eine erste Glasfaserschicht (44), die konfiguriert ist, um die erste wasserdichte Schicht zu tragen; und
ein Aluminiumsilikatgranulat (12) mit einer Partikelgröße zwischen 0,2 mm und 2,4 mm, verbunden mit der ersten wasserdichten Schicht, wobei das Aluminiumsilikatgranulat ein Reflexionsvermögen von 65 % oder größer aufweist und konfiguriert ist, um die Durchlässigkeit von ultraviolettem Licht zu der ersten wasserdichten Schicht zu verringern, und wobei das Aluminiumsilikatgranulat mit einem kationischen fluorierten (Meth)acrylcopolymer beschichtet ist, das der Adsorption und Absorption von Asphaltchemikalien durch das Aluminiumsilikatgranulat widersteht.

6. System nach Anspruch 5, umfassend eine zweite wasserdichte Schicht.

7. System nach Anspruch 5 oder 6, umfassend eine zweite Glasfaser-, Polyester- oder Glasfaser/Polyester-verstärkte Schicht.

8. System nach einem oder mehreren der Ansprüche 5 bis 7, umfassend die Isolierschicht.

9. System nach einem oder mehreren der Ansprüche 5 bis 8, wobei die erste wasserdichte Schicht eine Membran auf Asphaltbasis ist.

10. System nach einem oder mehreren der Ansprüche 1 bis 4 oder nach einem oder mehreren der Ansprüche 5 bis 9, wobei das Aluminiumsilikatgranulat porös ist.

11. System nach einem oder mehreren der Ansprüche 1 bis 4 oder nach einem oder mehreren der Ansprüche 5 bis 10, wobei das Reflexionsvermögen des Aluminiumsilikatgranulats größer als 70 %, vorzugsweise größer als 80 % ist.

12. System nach einem oder mehreren der Ansprüche 1 bis 4 oder nach einem oder mehreren der Ansprüche 5 bis 11, wobei die fluorierte Acrylcopolymerbeschichtung mindestens 0,001 Gew.-% eines unbeschichteten Aluminiumsilikatgranulats beträgt.

13. Verfahren zum Herstellen eines Bedachungssystems nach Anspruch 1, umfassend:
Beschichten eines Aluminiumsilikatgranulats mit einer Partikelgröße zwischen 0,2 mm und 2,4 mm
und einem Reflexionsvermögen von 65 % oder größer, wobei die Beschichtung ein fluoriertes (Meth)acrylcopolymer umfasst, das der Adsorption und Absorption von Asphaltchemikalien durch das Aluminiumsilikatgranulat aus einer wasserdichten Schicht widersteht;
Trocknen der Beschichtung auf dem Aluminiumsilikatgranulat; und
Verbinden des Aluminiumsilikatgranulats mit der wasserdichten Schicht.

14. Verfahren nach Anspruch 13, wobei die wasserdichte Schicht eine Membran auf Asphaltbasis ist.

15. Verfahren nach Anspruch 13 oder 14, wobei die Beschichtung mindestens 0,001 Gew.-% eines unbeschichteten Aluminiumsilikatgranulats des fluorierten Acrylcopolymers beträgt.

## Revendications

1. Système de toiture à membrane (10), comprenant:
une couche imperméable (16) configurée pour protéger une couche d'isolation (14); et un granule de silicate d'aluminium (12) ayant une taille de la particule entre 0,2 mm - 2,4 mm couplé à la couche imperméable, où le granule de silicate d'aluminium a une réflectivité de 65% ou plus et est configuré pour réduire la transmission de lumière ultraviolette à la couche imperméable, **caractérisé en ce que** le granule de silicate d'aluminium est revêtu dans un copolymère cationique (méth)acrylique fluoré qui résiste à l'adsorption et l'absorption des produits chimiques asphaltiques par le granule de silicate d'aluminium de la couche imperméable.

2. Système selon la revendication 1 comprenant la couche d'isolation et où la couche imperméable se couple à la couche d'isolation.

3. Système selon la revendication 1 ou 2, où la couche imperméable est une membrane à base d'asphalte.

4. Système selon l'une ou plusieurs des revendications 1 à 3, où la couche imperméable comprend une matrice de fibres de verre, de polyester ou de fibres de verre/polyester configurée pour renforcer la couche imperméable.

5. Système de toiture construit (40) comprenant:
une première couche imperméable (42) configurée pour protéger une couche d'isolation (14);
une première couche de fibres de verre (44) configurée pour soutenir la première couche imperméable; et
un granule de silicate d'aluminium (12) ayant une taille de la particule entre 0,2 mm - 2,4 mm couplé à la première couche imperméable, où le granule de silicate d'aluminium a une réflectivité de 65 % ou plus et est configuré pour réduire la transmission de lumière ultraviolette à la première couche imperméable, et où le granule de silicate d'aluminium est revêtu dans un copolymère cationique (méth)acrylique fluoré qui résiste à l'adsorption et l'absorption des produits chimiques asphaltiques par le granule de silicate d'aluminium.

6. Système selon la revendication 5, comprenant une seconde couche imperméable.

7. Système selon la revendication 5 ou 6, comprenant une seconde couche renforcée par des fibres de verre, polyester, ou fibres de verre/polyester.

8. Système selon l'une ou plusieurs des revendications 5 à 7, comprenant la couche d'isolation.

9. Système selon l'une ou plusieurs des revendications 5 à 8, où la première couche imperméable est une membrane à base d'asphalte.

10. Système selon l'une ou plusieurs des revendications 1 à 4 ou selon l'une ou plusieurs des revendications 5 à 9, où le granule de silicate d'aluminium est poreux.

11. Système selon l'une ou plusieurs des revendications 1 à 4 ou selon l'une ou plusieurs des revendications 5 à 10, où la réflectivité du granule de silicate d'aluminium est plus de 70 %, préférablement plus de 80 %.

12. Système selon l'une ou plusieurs des revendications 1 à 4 ou selon l'une ou plusieurs des revendications 5 à 11, où le revêtement de copolymère acrylique fluoré est d'au moins 0,001 % en poids d'un granule de silicate d'aluminium non revêtu.

13. Procédé de fabrication un système de toiture selon la revendication 1, comprenant:
Revêtir un granule de silicate d'aluminium ayant une taille de la particule entre 0,2 mm - 2,4 mm et
une réflectivité de 65 % ou plus, où le revêtement comprend un copolymère cationique (méth)acrylique fluoré qui résiste à l'adsorption et l'absorption des produits chimiques asphaltiques par le granule de silicate d'aluminium d'une couche imperméable;
sécher le revêtement sur le granule de silicate d'aluminium; et
coupler le granule de silicate d'aluminium à la couche imperméable.

14. Procédé selon la revendication 13, où la couche imperméable est une membrane à base d'asphalte.

15. Procédé selon la revendication 13 ou 14, où le revêtement est d'au moins 0,001 % en poids d'un granule de silicate d'aluminium non revêtu du copolymère acrylique fluoré.
